# FASCICULE DE BREVET EUROPEEN

(11) **EP 3 383 616 B1**
(45) Date de publication et mention de la délivrance du brevet: **30.10.2019**
(21) Numéro de dépôt: 16815619.8
(22) Date de dépôt: 30.11.2016
(51) Int. Cl.: B29C 48/94, C08L 23/02, C08L 27/16

(54) **AGENT D'EXTRUSION POUR POLYOLEFINES**
EXTRUSIONSHILFSMITTEL FÜR POLYOLEFINE
EXTRUSION AID FOR POLYOLEFINS

(30) Priorité: 02.12.2015 FR 1561724
(43) Date de publication de la demande: 10.10.2018
(73) Titulaire: Arkema France, 92700 Colombes (FR)
(72) Inventeur: DEVISME, Samuel, 76000 Rouen (FR); BEAUME, François, 69230 Saint Genis Laval (FR); LUCE, Ludovic, 76 Ymare (FR)
(74) Mandataire: Albani, Dalila
(86) Numéro de dépôt international: PCT/FR2016/053151
(87) Numéro de publication internationale: WO 2017/093665

(56) Documents cités:
- FR-A1- 2 892 421
- Arkema Inc.: "KYNAR FLEX PPA", , 1 mars 2012 (2012-03-01), pages 1-20, XP055288313, Extrait de l'Internet: URL:http://asia.kynar.com/export/sites/kyn ar-asia/.content/medias/downloads/literatu re/kynar-flex-fluoropolymers-process-aids- presentation.pdf [extrait le 2016-07-13]

## Description

### DOMAINE DE L'INVENTION

La présente invention concerne un agent d'extrusion pour la fabrication de produits extrudés à base de polyoléfines, ainsi que l'utilisation de cet agent d'extrusion dans un procédé d'extrusion.

### ARRIERE-PLAN TECHNIQUE

Les polyoléfines telles que le polyéthylène sont utiles pour la fabrication d'objets divers par extrusion. Elles peuvent être utilisées avec ou sans charges, selon les applications. Il est connu d'utiliser des agents d'extrusion (en anglais : « *polymer processing aids* ») pour améliorer les propriétés des produits extrudés.

Un problème particulier qui est rencontré, notamment lors de la fabrication de feuilles, tubes, films, ou bandelettes à partir de polyoléfines chargées, est l'apparition de dépôts en sortie de la filière d'extrusion. Ces dépôts (en anglais : « *die build-up* ») peuvent créer des défauts de surface et l'altération des propriétés mécaniques des produits extrudés. Il s'agit de défauts spécifiques, qui sont distincts d'autres défauts de surface qui sont susceptibles d'apparaître indépendamment de tout dépôt en sortie de filière, tels que par exemple des défauts liés à une irrégularité de l'écoulement.

La société 3M commercialise des agents d'extrusion de la gamme Dynamar™, qui sont notamment censés réduire les dépôts en sortie de filière lors de l'extrusion de films de polyéthylène. Ces agents d'extrusion comprennent des polymères fluorés qui sont des fluoroélastomères de viscosité élevée.

Le document EP 1616907 décrit un mélange-maître comprenant un polymère fluoré, une polyoléfine, et un agent d'interface et son utilisation comme agent d'extrusion. Le problème des dépôts en sortie de filière lors de l'extrusion d'une polyoléfine chargée n'est pas spécifiquement abordé dans le document.

Le document WO 2007/080338 décrit l'utilisation d'un polyfluorure de vinylidène hétérogène en mélange avec un agent d'interface et éventuellement une polyoléfine, en tant qu'agent d'extrusion pour résine thermoplastique. L'agent d'extrusion a pour but de réduire certains défauts de surface. Le problème des dépôts en sortie de filière lors de l'extrusion d'une polyoléfine chargée n'est pas spécifiquement abordé dans le document.

Les documents WO 02/066544, WO 03/040232, WO 2005/019334, WO 2010/135018 et US 2011/0172338 décrivent également divers agents d'extrusion à base de polymères fluorés. Ces agents d'extrusion sont de viscosité élevée et/ou n'ont pas pour objet de résoudre le problème posé par les dépôts en sortie de filière lors de l'extrusion d'une polyoléfine chargée.

Arkema Inc.: "KYNAR FLEX PPA" du 1 mars 2012 décrit l'utilisation d'un copolymère VDF/HFP, le Kynar Flex 5300, comme agent d'extrusion pour des polyoléfines chargées pour réduire la pression dans la filière et la formation de dépôts en sortie de filière. Le Kynar Flex 5300 a une viscosité à l'état fondu à 232°C et un taux de cisaillement de 100 s-1 d'entre 17 et 20 kP.

FR 2892421 décrit l'utilisation de Kynar Flex 2821, un copolymère de VDF et HFP avec une viscosité de 16 kP ou de Kynar Flex 3121 (viscosité de 23 kP) pour l'extrusion d'un polyéthylène basse densité. D2 décrit l'utilisation de ces copolymères pour réduire les dépôts en sortie de filière dans l'extrusion des polyoléfines chargées. La teneur en charge des compositions étudiées est très faible avec un maximum de 1,6 % en poids de charge minérale.

Il existe donc un réel besoin de disposer d'un agent d'extrusion permettant de réduire les dépôts en sortie de filière (« *die build-up* ») lors de l'extrusion de polyoléfines chargées.

### RESUME DE L'INVENTION

L'invention concerne en premier lieu l'utilisation d'une composition en tant qu'agent d'extrusion pour la fabrication d'un produit extrudé, dans laquelle :
- le produit extrudé comprend une polyoléfine, ainsi que des charges dans une teneur supérieure ou égale à 15 % en poids ;
- la composition utilisée comprend un polymère fluoré présentant une viscosité inférieure ou égale à 15 kP à une température de 232°C et à un taux de cisaillement de 100 s⁻¹.

Selon un mode de réalisation, le polymère fluoré présente une viscosité inférieure ou égale à 10 kP, de préférence inférieure ou égale à 5 kP, à une température de 232°C et à un taux de cisaillement de 100 s⁻¹.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère choisi parmi le chlorotrifluoroéthylène, l'hexafluoropropylène, le trifluoroéthylène, le tétrafluoroéthylène et l'éthylène ; et, de manière plus particulièrement préférée, les copolymères contiennent au moins 75 % en poids de motifs issus du fluorure de vinylidène, et de manière encore plus préférée au moins 80 % en poids de motifs issus du fluorure de vinylidène.

Selon un mode de réalisation, le produit extrudé comprend une teneur en charges de 20 à 70 % en poids, de préférence de 30 à 55 % en poids.

Selon un mode de réalisation, les charges sont choisies parmi la silice, l'alumine, la zéolithe, l'oxyde de titane, le carbonate de calcium, le carbonate de sodium, le carbonate de potassium, l'hydrotalcite, le talc, l'oxyde de zinc, l'oxyde de magnésium, l'oxyde de calcium, la terre de diatomée, le noir de carbone, les pigments minéraux, et les mélanges de ceux-ci.

Selon un mode de réalisation, la composition utilisée est dépourvue d'agent synergiste.

Selon un mode de réalisation, la composition utilisée est un mélange-maître comprenant le polymère fluoré en mélange avec une polyoléfine, de préférence avec la polyoléfine du produit extrudé, la proportion pondérale de polymère fluoré dans le mélange-maître étant de préférence de 1 à 40 %, encore de préférence de 2 à 20 %, de manière plus particulièrement préférée de 3 à 10 %.

Selon un mode de réalisation, la composition utilisée est un mélange-maître comprenant le polymère fluoré en mélange avec des charges et une polyoléfine. Le taux massique en charges est compris de préférence entre 20 et 80 %, de préférence entre 30 et 60 %.

Selon un mode de réalisation, l'utilisation de l'invention est pour la fabrication de films, de feuilles, de tubes ou de bandelettes.

L'invention concerne également un procédé d'extrusion d'une polyoléfine additionnée de charges, en présence d'un agent d'extrusion, permettant d'obtenir un produit extrudé, dans lequel l'agent d'extrusion comprend un polymère fluoré présentant une viscosité inférieure ou égale à 15 kP à une température de 232°C et à un taux de cisaillement de 100 s⁻¹, et dans lequel le produit extrudé comprend une teneur en charges supérieure ou égale à 15 % en poids.

Selon un mode de réalisation, le polymère fluoré est tel que décrit ci-dessus.

Selon un mode de réalisation, les charges sont telles que décrites ci-dessus et / ou sont présentes dans le produit extrudé dans la teneur décrite ci-dessus.

Selon un mode de réalisation, l'agent d'extrusion est une composition telle que décrite ci-dessus.

Selon un mode de réalisation, l'agent d'extrusion est utilisé en une quantité telle que la teneur pondérale en polymère fluoré dans le produit extrudé est de 0,01 à 1 %, de préférence de 0,02 à 0,5 %, et de manière plus particulièrement préférée de 0,02 à 0,15 %.

Selon un mode de réalisation, le produit extrudé est un film, une feuille, un tube ou une bandelette.

La présente invention permet de surmonter les inconvénients de l'état de la technique. Elle fournit plus particulièrement des agents d'extrusion permettant de réduire les dépôts en sortie de filière (« *die build-up* ») lors de l'extrusion de polyoléfines chargées.

Cela est accompli grâce au recours à un polymère fluoré, notamment un polyfluorure de vinylidène (PVDF) ou dérivé, de faible viscosité.

L'agent d'extrusion de l'invention permet également d'améliorer les autres aspects du processus d'extrusion : diminution de pression et amélioration de l'état de surface.

Selon un mode de réalisation préféré de l'invention, l'agent d'extrusion est dépourvu de tout agent d'interface. Il a été découvert de façon surprenante que l'absence d'agent d'interface, dans le contexte particulier qui est celui de l'invention, améliore les paramètres de l'extrusion.

### DESCRIPTION DE MODES DE REALISATION DE L'INVENTION

L'invention est maintenant décrite plus en détail et de façon non limitative dans la description qui suit.

L'agent d'extrusion selon l'invention comprend un polymère fluoré, ou fluoropolymère, c'est-à-dire un polymère comportant des substituants fluor.

De préférence, il s'agit d'un PVDF homopolymère ou d'un copolymère dérivé du PVDF. De tels copolymères sont obtenus par copolymérisation de fluorure de vinylidène (VDF) avec au moins un autre comonomère qui est avantageusement choisi parmi le chlorotrifluoroéthylène (CTFE), l'hexafluoropropylène (HFP), le trifluoroéthylène (TrFE), le tétrafluoroéthylène (TFE) et l'éthylène.

Plusieurs comonomères peuvent éventuellement être utilisés.

Avantageusement, ledit copolymère contient au moins 75 % en poids de motifs issus du comonomère VDF, de préférence au moins 80 % voire au moins 85 %.

Avantageusement, le polymère fluoré de l'agent d'extrusion de l'invention est un polymère thermoplastique (par opposition à un fluoroélastomère). Les polymères fluorés contenant une proportion élevée de motifs issus du comonomère VDF ont tendance à être thermoplastiques.

Par « *thermoplastique* », on entend ici un polymère non élastomérique. Un polymère élastomérique est défini comme étant un polymère qui peut être étiré, à température ambiante, à deux fois sa longueur initiale et qui, après relâchement des contraintes, reprend rapidement sa longueur initiale, à 10 % près, comme indiqué par l'ASTM dans la *Special Technical Publication* n°184.

L'invention prévoit que le polymère fluoré selon l'invention présente une viscosité inférieure ou égale à 15 kP.

La viscosité est mesurée à 232°C, à un taux de cisaillement de 100 s⁻¹ à l'aide d'un rhéomètre capillaire ou d'un rhéomètre à plaques parallèles, selon la norme ASTM D3825 (les deux méthodes donnent des résultats similaires ; en cas de discordance hypothétique, c'est la méthode du rhéomètre capillaire qui serait retenue).

Selon des modes de réalisation particuliers, le polymère fluoré utilisé dans l'invention présente une viscosité inférieure ou égale à 14 kP, ou à 13 kP, ou à 12 kP, ou à 11 kP, ou à 10 kP, ou à 9 kP, ou à 8 kP, ou à 7 kP, ou à 6 kP, ou à 5 kP, ou à 4 kP, ou à 3 kP, ou à 2 kP, ou à 1 kP, ou à 0,5 kP.

Le polymère fluoré utilisé dans l'invention peut être obtenu par des méthodes de polymérisation connues comme la polymérisation en solution, en émulsion ou en suspension. Selon un mode de réalisation, il est préparé par un procédé de polymérisation en émulsion en l'absence d'agent tensioactif fluoré.

Le polymère fluoré utilisé dans l'invention présente de préférence une masse moléculaire en nombre allant de 5 kDa à 200 kDa, de préférence de 10 kDa à 120 kDa, comme mesuré par chromatographie d'exclusion stérique en DMF/LiBr 0,003 M avec du polyméthacrylate de méthyle comme standard de calibration.

Un tel polymère fluoré de faible masse moléculaire peut être obtenu notamment en utilisant un taux élevé d'un ou plusieurs agents de transfert de chaîne lors du procédé de polymérisation. Selon un mode de réalisation, des agents de transfert de chaîne adaptés à ce but sont choisis parmi :
- les hydrocarbures à chaîne courte, tels que l'éthane et le propane,
- les esters, tels que l'acétate d'éthyle et le maléate de diéthyle,
- les alcools, les carbonates, les cétones,
- les halocarbures et les hydrohalocarbures, tels que les chlorocarbures hydrochlorocarbures, chlorofluorocarbures et les hydrochlorofluorocarbures,
- les solvants organiques, lorsqu'ils sont ajoutés à une réaction de polymérisation en émulsion ou en suspension.

D'autres facteurs favorisant l'obtention de polymères de bas poids moléculaire sont la conduite de la réaction de polymérisation à des températures élevées, ou encore l'emploi de taux élevés d'initiateur.

Le polymère fluoré utilisé dans l'invention, lorsqu'il s'agit d'un copolymère, peut être homogène ou hétérogène, et de préférence homogène. Un polymère homogène présente une structure de chaînes uniforme, la répartition statistique des comonomères ne variant pas entre les chaînes polymères. Dans un polymère hétérogène, les chaînes polymères présentent une distribution en teneur moyenne en comonomères de type multimodale ou étalée, il comprend donc des chaînes polymères riches en un comonomère et des chaînes polymères pauvres en ledit comonomère. Un exemple de PVDF hétérogène figure dans le document WO 2007/080338.

Un copolymère homogène peut être préparé par un procédé en une seule étape, dans lequel les comonomères sont injectés progressivement en conservant un rapport massique entre eux constant.

L'agent d'extrusion selon l'invention peut optionnellement comporter un ou plusieurs additifs en mélange avec le polymère fluoré. Les additifs peuvent notamment être choisis parmi les antioxydants, et plus particulièrement les antioxydants primaires de type phénolique ou phénolique encombré, et/ou les antioxydants secondaires choisis parmi des composants phosphorés (phosphonites et/ou phosphites).

Selon un mode de réalisation, l'agent d'extrusion de l'invention peut comprendre également un agent d'interface.

Selon un autre mode de réalisation, qui est préféré, l'agent d'extrusion de l'invention est dépourvu d'agent d'interface.

Par « *agent d'interface* », ou synergiste, on entend un agent tensioactif qui est un oligomère ou un polymère thermoplastique se trouvant à l'état liquide ou fondu à la température d'extrusion, et possédant une viscosité à l'état fondu qui est inférieure à celle du polymère à extruder et des additifs utilisés.

A titre d'exemple d'agent d'interface, on peut citer les silicones, les copolymères silicones-polyéthers, les polyesters aliphatiques, les polyesters aromatiques tels que par exemple le diisobutyl ester d'acide phtalique, les polyéthers tels que par exemple les polyéthers polyols et les poly(oxyde d'alkylène), les oxydes d'amine tels que par exemple l'oxyde d'octyldiméthyl amine, les acides carboxyliques tels que par exemple l'hydroxy-butanedioïque acide, les esters d'acide gras.

A titre d'exemple de polyester aliphatique, on peut citer l'acide polylactique et les polycaprolactones.

L'agent d'interface peut être notamment un polyéther de préférence choisi parmi des oligomères ou des polymères ayant des motifs oxyde d'alkylène (par ex. oxyde d'éthylène ou de propylène). On peut citer à titre d'exemple le poly(oxyéthylène)glycol appelé communément polyéthylène glycol (PEG), avec avantageusement une masse moléculaire moyenne en nombre Mn comprise entre 400 et 15000 g/mol et une température de fusion comprise entre 50 et 80°C.

Ainsi, selon un mode de réalisation préféré, l'agent d'extrusion de l'invention est dépourvu de polyéthylène glycol et avantageusement de tout autre agent d'interface cité ci-dessus.

L'agent d'extrusion de l'invention est destiné à être utilisé pour l'extrusion d'un matériau à base de polyoléfine contenant des charges.

La polyoléfine peut être notamment choisie parmi :
- un polyéthylène, notamment un polyéthylène basse densité (LDPE), haute densité (HDPE), basse densité linéaire (LLDPE), très haute densité (UHDPE) ;
- un polypropylène, notamment un polypropylène isotactique ou syndiotactique ;
- un polybutène (obtenu à partir du 1-butène) ;
- un poly(3-méthyl butène) ;
- un poly(4-méthyl pentène).

Il est également possible d'utiliser un mélange de plusieurs polyoléfines.

Les charges peuvent être des charges organiques et/ou des charges minérales, de préférence des charges minérales.

A titre de charges minérales on peut notamment utiliser de la silice, de l'alumine, de la zéolithe, de l'oxyde de titane, du carbonate (par exemple de calcium, de sodium, de potassium), de l'hydrotalcite, du talc, de l'oxyde de zinc, de l'oxyde de magnésium ou de calcium, de la terre de diatomée, du noir de carbone et/ou des pigments minéraux.

A titre de charge organique, on peut notamment utiliser un pigment organique, un antioxydant, un absorbeur UV, un photostabilisant amine à encombrement stérique (HALS), un agent glissant, un agent anti-bloquant, un agent anti-buée ou un agent anti-déperlant.

Dans l'invention, les charges sont utilisées à une teneur supérieure ou égale à 15 % en poids par rapport à la composition extrudée totale (polyoléfine, charges, agent d'extrusion, additifs complémentaires éventuels) ou, de manière équivalente, à une teneur supérieure ou égale à 15 % en poids par rapport au produit extrudé.

Selon certains modes de réalisation particuliers, cette teneur pondérale de charges peut être : de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

Selon un premier mode de réalisation, l'agent d'extrusion peut consister ou consister essentiellement en le polymère fluoré décrit ci-dessus. Optionnellement, il peut comprendre en outre un ou plusieurs additifs.

Selon un deuxième mode de réalisation, l'agent d'extrusion peut être un mélange-maître comprenant le polymère fluoré décrit ci-dessus ainsi qu'une portion de la polyoléfine devant être extrudée (et optionnellement un ou plusieurs additifs). Dans ce cas, la proportion pondérale de polymère fluoré dans l'agent d'extrusion peut varier de manière encore plus préférée de 1 à 50 %, de manière encore plus préférée de 1 à 25 %, de manière encore plus préférée de 1 à 15 %, et plus préférentiellement de 2 à 10 %, et plus particulièrement de 3 à 7 %. De préférence dans ce mode de réalisation, l'agent d'extrusion consiste ou consiste essentiellement en un mélange de polymère fluoré et de polyoléfine.

Selon un troisième mode de réalisation, l'agent d'extrusion consiste ou consiste essentiellement en un mélange de polymère fluoré, de polyoléfine et de charges (telles que décrites ci-dessus). Optionnellement, il peut comprendre en outre un ou plusieurs additifs. Le rapport pondéral de la teneur en charges par rapport à la somme des teneurs en polyoléfine, charges et polymère fluoré est compris de préférence entre 30 et 80 %, de manière plus particulièrement préférée entre 40 et 60 %.

Lorsque l'agent d'extrusion comporte d'autres constituants en plus du polymère fluoré, et en particulier lorsqu'il s'agit d'un mélange-maître du deuxième mode de réalisation ou du troisième mode de réalisation décrits ci-dessus, il peut être fabriqué par mélange des différents constituants à une température telle qu'au moins l'un des polymères en présence est à l'état fondu (de préférence tous). Le mélange peut être effectué par exemple, par extrusion ou malaxage, l'extrusion bi-vis (ou co-malaxage) étant préférée.

L'agent d'extrusion peut être obtenu par exemple sous forme de granulés. Il peut également être obtenu sous forme de poudre, le cas échéant en appliquant une étape supplémentaire de broyage.

L'agent d'extrusion est combiné avec la polyoléfine, les charges, et d'éventuels additifs supplémentaires lors de l'étape d'extrusion.

La quantité d'agent d'extrusion qui est utilisée est ajustée de telle sorte que la teneur pondérale en polymère fluoré dans le mélange total (ou, de manière équivalente, dans le produit extrudé) est de 0,01 à 1 %, de préférence de 0,02 à 0,5 %, et de manière plus particulièrement préférée de 0,02 à 0,15 %.

L'étape d'extrusion permet d'obtenir divers produits extrudés tels que des films, des feuilles, des tubes ou bandelettes.

### EXEMPLES

Les exemples suivants illustrent l'invention sans la limiter.

Dans les exemples, les polymères fluorés suivants sont utilisés :
- Polymère A : copolymère P(VDF-HFP) de la société Arkema, avec un taux pondéral de HFP d'environ 18 %, une température d'environ fusion de 130°C, et une viscosité de 0,4 kP ;
- Polymère B : homopolymère PVDF de la société Arkema, avec une température d'environ fusion de 168°C, et une viscosité de 3,5 kP ;
- Polymère C : copolymère P(VDF-HFP) hétérophasique de la société Arkema, avec un taux pondéral de HFP d'environ 10 %, une température de fusion d'environ 166°C, et une viscosité de 11kP ;
- Polymère D : copolymère P(VDF-HFP) hétérophasique de la société Arkema, avec un taux pondéral de HFP d'environ 10 %, une température de fusion d'environ 166°C, et une viscosité de 24 kP ;
- Polymère E : copolymère P(VDF-HFP) de la société Arkema, avec un taux pondéral de HFP d'environ 11 %, une température de fusion d'environ 142°C, et une viscosité de 16 kP ;
- Polymère F : copolymère Dynamar™ FX5911 de la société 3M, ayant une viscosité de 27 kP mesurée à 232°C, à un taux de cisaillement de 100 s⁻¹ à l'aide d'un rhéomètre capillaire ou d'un rhéomètre à plaques parallèles, selon la norme ASTM D3825.

La polyoléfine utilisée est un polyéthylène métallocène ayant un indice de fluidité de 15 tel que mesuré selon la norme ASTM D1238 (à 190°C et à 2,16 kg), fourni par Ineos (grade Eltex PF1315AA, sans additif).

A titre de charges on utilise du carbonate de calcium (CaCO₃), fourni par Omya (grade Omyafilm 707 OG ; granulométrie: coupe granulométrique (d98%) = 6 µm, diamètre moyen des particules (d50%)= 1,6 µm). Les différents compounds ont été réalisés sur bi-vis co-rotative à 310 tr/min, à une température de 200°C et un débit de 70 kg/h.

Différents mélanges-maîtres sont fabriqués, sous forme de granulés, en mélangeant 5 % en poids de l'un quelconque des polymères A à E ci-dessus avec 95 % en poids de polyoléfine. La fabrication des mélanges-maîtres est effectuée par extrusion sur bi-vis co-rotative à 250 tr/min, avec un débit de 2,5 kg/h. Un profil plat à 190°C (avec zone 1 à 160°) est utilisé.

Ces mélanges-maîtres A à E sont ensuite utilisés en tant qu'agents d'extrusion comme décrit ci-dessous.

### Exemple 1 - extrusion à un taux de charges de 55 %

Dans cet exemple, on effectue des expériences d'extrusion à 200°C de polyoléfine (décrite ci-dessus) avec 55 % en poids de charges sur une extrudeuse de la société Collin ayant un diamètre de vis de 30 mm, un rapport longueur / diamètre de 25, et une filière capillaire de 0,5 mm de diamètre et 10 mm de longueur.

Après 15 minutes d'extrusion, l'un des différents mélanges-maîtres précédemment décrits est introduit à hauteur de 2 % en masse, pour obtenir un dosage de 1000 ppm de fluoropolymère dans la composition finale. Le jonc est ensuite coupé et la filière nettoyée avant le début de l'analyse. L'analyse consiste à extruder et suivre au cours du temps le volume de dépôt en filière qui est formé, par analyse d'image prise par appareil photo.

Un témoin sans mélange-maître (polyoléfine chargée extrudée sans agent d'extrusion) est également mis en œuvre.

Les résultats sont résumés dans le tableau I ci-dessous :

**Tableau I**

| Mélange-maître | Viscosité du fluoropolymère (à 232°C et 100 s⁻¹) | Volume de dépôt en filière après 20 minutes d'extrusion |
|---|---|---|
| B (invention) | 3,5 kP | 58 mm³ |
| C (invention) | 11 kP | 32 mm³ |
| D (comparatif) | 24 kP | 184 mm³ |
| E (comparatif) | 16 kP | 100 mm³ |
| F (comparatif) | 27 kP | 165 mm³ |
| Aucun (témoin) | - | 250 mm³ |

On constate que les mélanges maîtres contenant des fluoropolymères de faible viscosité (B et C) sont ceux qui permettent le mieux de limiter l'apparition de dépôt en filière par rapport à la référence et aux essais comparatifs D, E et F.

### Exemple 2 - extrusion à un taux de charges de 30 %

Cet exemple est mis en œuvre de la même manière que le précédent, à ceci près que le taux pondéral de charges dans la polyoléfine est ramené à 30 %.

Les résultats sont résumés dans le tableau II ci-dessous :

**Tableau II**

| Mélange-maître | Viscosité du fluoropolymère (à 232°C et 100 s⁻¹) | Volume de dépôt en filière après 20 minutes d'extrusion |
|---|---|---|
| A (invention) | 0,4 kP | 13 mm³ |
| B (invention) | 3,5 kP | 0,3 mm³ |
| D (comparatif) | 24 kP | 143 mm³ |
| E (comparatif) | 16 kP | 221 mm³ |
| F (comparatif) | 27 kP | 95 mm³ |
| Aucun (témoin) | - | 15 mm³ |

A nouveau, on constate que l'utilisation de mélange maître contenant un fluoropolymère de faible viscosité (A et B) permet le mieux de limiter l'apparition de dépôt en filière pour un PE chargé à 30% de carbonate de calcium. Les fluoropolymères de viscosité élevée (essais comparatifs D, E et F) aggravent le problème du dépôt en filière par rapport au témoin sans agent d'extrusion.

## Revendications

1. Utilisation d'une composition en tant qu'agent d'extrusion pour la fabrication d'un produit extrudé, dans laquelle :
- le produit extrudé comprend une polyoléfine, ainsi que des charges dans une teneur supérieure ou égale à 15 % en poids ;
- la composition utilisée comprend un polymère fluoré présentant une viscosité inférieure ou égale à 15 kP à une température de 232°C et à un taux de cisaillement de 100 s⁻¹ mesurée à l'aide d'un rhéomètre capillaire selon la norme ASTM D3825.

2. Utilisation selon la revendication 1, dans laquelle le polymère fluoré présente une viscosité inférieure ou égale à 10 kP, de préférence inférieure ou égale à 5 kP, à une température de 232°C et à un taux de cisaillement de 100 s⁻¹.

3. Utilisation selon la revendication 1 ou 2, dans laquelle le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère choisi parmi le chlorotrifluoroéthylène, l'hexafluoropropylène, le trifluoroéthylène, le tétrafluoroéthylène et l'éthylène ; et dans laquelle, de manière plus particulièrement préférée, les copolymères contiennent au moins 75 % en poids de motifs issus du fluorure de vinylidène, et de manière encore plus préférée au moins 80 % en poids de motifs issus du fluorure de vinylidène.

4. Utilisation selon l'une des revendications 1 à 3, dans laquelle le produit extrudé comprend une teneur en charges de 20 à 70 % en poids, de préférence de 30 à 55 % en poids.

5. Utilisation selon l'une des revendications 1 à 4, dans laquelle les charges sont choisies parmi la silice, l'alumine, la zéolithe, l'oxyde de titane, le carbonate de calcium, le carbonate de sodium, le carbonate de potassium, l'hydrotalcite, le talc, l'oxyde de zinc, l'oxyde de magnésium, l'oxyde de calcium, la terre de diatomée, le noir de carbone, les pigments minéraux, et les mélanges de ceux-ci.

6. Utilisation selon l'une des revendications 1 à 5, dans laquelle la composition utilisée est dépourvue d'agent synergiste.

7. Utilisation selon l'une des revendications 1 à 6, dans laquelle la composition utilisée est un mélange-maître comprenant le polymère fluoré en mélange avec une polyoléfine, de préférence avec la polyoléfine du produit extrudé, la proportion pondérale de polymère fluoré dans le mélange-maître étant de préférence de 1 à 50 %, encore de préférence de 2 à 10 %, de manière plus particulièrement préférée de 3 à 7%.

8. Utilisation selon l'une des revendications 1 à 6, dans laquelle la composition utilisée est un mélange-maître comprenant le polymère fluoré en mélange avec des charges et une polyoléfine, de préférence la polyoléfine et les charges du produit extrudé, le taux massique de charges dans la composition étant de préférence compris entre 30 et 80 %, de manière plus particulièrement préférée entre 40 et 60 %.

9. Utilisation selon l'une des revendications 1 à 8, pour la fabrication de films, de feuilles, de tubes ou de bandelettes.

10. Procédé d'extrusion d'une polyoléfine additionnée de charges, en présence d'un agent d'extrusion, permettant d'obtenir un produit extrudé, dans lequel l'agent d'extrusion comprend un polymère fluoré présentant une viscosité inférieure ou égale à 15 kP à une température de 232°C et à un taux de cisaillement de 100 s⁻¹ mesurée à l'aide d'un rhéomètre capillaire selon la norme ASTM D3825, et dans lequel le produit extrudé comprend une teneur en charges supérieure ou égale à 15 % en poids.

11. Procédé selon la revendication 10, dans lequel le polymère fluoré est tel que décrit dans l'une des revendications 2 ou 3.

12. Procédé selon la revendication 10 ou 11, dans laquelle les charges sont telles que décrites à la revendication 5 et / ou sont présentes dans le produit extrudé dans la teneur décrite à la revendication 4.

13. Procédé selon l'une des revendications 10 à 12, dans laquelle l'agent d'extrusion est une composition telle que décrite dans l'une des revendications 6 à 8.

14. Procédé selon l'une des revendications 10 à 13, dans lequel l'agent d'extrusion est utilisé en une quantité telle que la teneur pondérale en polymère fluoré dans le produit extrudé est de 0,01 à 1 %, de préférence de 0,02 à 0,5 %, et de manière plus particulièrement préférée de 0,02 à 0,15 %.

15. Procédé selon l'une des revendications 10 à 14, dans lequel le produit extrudé est un film, une feuille, un tube ou une bandelette.

## Patentansprüche

1. Verwendung einer Zusammensetzung als Extrusionsmittel zur Herstellung eines extrudierten Produkts, wobei:
- das extrudierte Produkt ein Polyolefin sowie Füllstoffe in einem Gehalt größer oder gleich 15 Gew.-% umfasst;
- die verwendete Zusammensetzung ein Fluorpolymer mit einer mit Hilfe eines Kapillarrheometers gemäß ASTM-Norm D3825 gemessenen Viskosität kleiner oder gleich 15 kP bei einer Temperatur von 232 °C und einer Scherrate von 100 s⁻¹ umfasst.

2. Verwendung nach Anspruch 1, wobei das Fluorpolymer eine Viskosität kleiner oder gleich 10 kP, vorzugsweise kleiner oder gleich 5 kP bei einer Temperatur von 232 °C und einer Scherrate von 100 s⁻¹ aufweist.

3. Verwendung nach Anspruch 1 oder 2, wobei es sich bei dem Fluorpolymer um ein Polymer handelt, das aus Vinylidenfluorid resultierende Einheiten umfasst und vorzugsweise aus Polyvinylidenfluorid-Homopolymer und Copolymeren, die Vinylidenfluorid-Einheiten und aus mindestens einem anderen Comonomer, das aus Chlortrifluorethylen, Hexafluorpropylen, Trifluorethylen, Tetrafluorethylen und Ethylen ausgewählt ist, resultierende Einheiten umfasst, ausgewählt ist und in dem die Copolymere besonders bevorzugt mindestens 75 Gew.-% aus Vinylidenfluorid resultierende Einheiten und noch weiter bevorzugt mindestens 80 Gew.-% aus Vinylidenfluorid resultierende Einheiten enthalten.

4. Verwendung nach einem der Ansprüche 1 bis 3, wobei das extrudierte Produkt einen Füllstoffgehalt von 20 bis 70 Gew.-%, vorzugsweise 30 bis 55 Gew.-%, aufweist.

5. Verwendung nach einem der Ansprüche 1 bis 4, wobei die Füllstoffe aus Siliciumdioxid, Aluminiumoxid, Zeolith, Titanoxid, Calciumcarbonat, Natriumcarbonat, Kaliumcarbonat, Hydrotalcit, Talk, Zinkoxid, Magnesiumoxid, Calciumoxid, Diatomeenerde, Ruß, anorganischen Pigmenten und Mischungen davon ausgewählt sind.

6. Verwendung nach einem der Ansprüche 1 bis 5, wobei die verwendete Zusammensetzung frei von synergistischem Mittel ist.

7. Verwendung nach einem der Ansprüche 1 bis 6, wobei es sich bei der verwendeten Zusammensetzung um einen Masterbatch handelt, der das Fluorpolymer in Abmischung mit einem Polyolefin, vorzugsweise dem Polyolefin des extrudierten Produkts, umfasst, wobei der Gewichtsanteil an Fluorpolymer in dem Masterbatch vorzugsweise 1 bis 50 %, weiter bevorzugt 2 bis 10 % und besonders bevorzugt 3 bis 7 % beträgt.

8. Verwendung nach einem der Ansprüche 1 bis 6, wobei es sich bei der verwendeten Zusammensetzung um einen Masterbatch handelt, der das Fluorpolymer in Abmischung mit Füllstoffen und einem Polyolefin, vorzugsweise dem Polyolefin und den Füllstoffen des extrudierten Produkts, umfasst, wobei der Gewichtsanteil an Füllstoffen in der Zusammensetzung vorzugsweise zwischen 30 und 80 % und besonders bevorzugt zwischen 40 und 60 % liegt.

9. Verwendung nach einem der Ansprüche 1 bis 8 zur Herstellung von Filmen, Folien, Rohren oder Bändern.

10. Verfahren zur Extrusion eines mit Füllstoffen additivierten Polyolefins in Gegenwart eines Extrusionsmittels, was den Erhalt eines extrudierten Produkts ermöglicht, wobei das Extrusionsmittel ein Fluorpolymer mit einer mit Hilfe eines Kapillarrheometers gemäß ASTM-Norm D3825 gemessenen Viskosität kleiner oder gleich 15 kP bei einer Temperatur von 232 °C und einer Scherrate von 100 s⁻¹ umfasst und bei dem das extrudierte Produkt einen Füllstoffgehalt größer oder gleich 15 Gew.-% aufweist.

11. Verfahren nach Anspruch 10, wobei das Fluorpolymer wie in einem der Ansprüche 2 oder 3 beschrieben ist.

12. Verfahren nach Anspruch 10 oder 11, wobei die Füllstoffe wie in Anspruch 5 beschrieben sind und/oder in dem extrudierten Produkt in dem in Anspruch 4 angegebenen Gehalt vorliegen.

13. Verfahren nach einem der Ansprüche 10 bis 12, wobei es sich bei dem Extrusionsmittel um eine Zusammensetzung gemäß einem der Ansprüche 6 bis 8 handelt.

14. Verfahren nach einem der Ansprüche 10 bis 13, wobei das Extrusionsmittel in einer solchen Menge verwendet wird, dass der Gewichtsgehalt an Fluorpolymer in dem extrudierten Produkt 0,01 bis 1 %, vorzugsweise 0,02 bis 0,5 % und besonders bevorzugt 0,02 bis 0,15 % beträgt.

15. Verfahren nach einem der Ansprüche 10 bis 14, wobei es sich bei dem extrudierten Produkt um einen Film, eine Folie, ein Rohr oder ein Band handelt.

## Claims

1. Use of a composition as polymer processing aid in the manufacture of an extruded product, in which:
- the extruded product comprises a polyolefin, and also fillers in a content of greater than or equal to 15% by weight;
- the composition used comprises a fluoropolymer exhibiting a viscosity of less than or equal to 15 kP at a temperature of 232°C and at a shear rate of 100 s⁻¹, measured using a capillary rheometer according to Standard ASTM D3825.

2. Use according to Claim 1, in which the fluoropolymer exhibits a viscosity of less than or equal to 10 kP, preferably of less than or equal to 5 kP, at a temperature of 232°C and at a shear rate of 100 s⁻¹.

3. Use according to Claim 1 or 2, in which the fluoropolymer is a polymer comprising units resulting from vinylidene fluoride and is preferably chosen from polyvinylidene fluoride homopolymer and copolymers comprising vinylidene fluoride units and units resulting from at least one other comonomer chosen from chlorotrifluoroethylene, hexafluoropropylene, trifluoroethylene, tetrafluoroethylene and ethylene; and in which, more particularly preferably, the copolymers contain at least 75% by weight of units resulting from vinylidene fluoride and more preferably still at least 80% by weight of units resulting from vinylidene fluoride.

4. Use according to one of Claims 1 to 3, in which the extruded product comprises a content of fillers of 20% to 70% by weight, preferably of 30% to 55% by weight.

5. Use according to one of Claims 1 to 4, in which the fillers are chosen from silica, alumina, zeolite, titanium oxide, calcium carbonate, sodium carbonate, potassium carbonate, hydrotalcite, talc, zinc oxide, magnesium oxide, calcium oxide, diatomaceous earth, carbon black, inorganic pigments and the mixtures of these.

6. Use according to one of Claims 1 to 5, in which the composition used is devoid of synergistic agent.

7. Use according to one of Claims 1 to 6, in which the composition used is a masterbatch comprising the fluoropolymer as a mixture with a polyolefin, preferably with the polyolefin of the extruded product, the proportion by weight of fluoropolymer in the masterbatch preferably being from 1% to 50%, more preferably from 2% to 10%, more particularly preferably from 3% to 7%.

8. Use according to one of Claims 1 to 6, in which the composition used is a masterbatch comprising the fluoropolymer as a mixture with fillers and a polyolefin, preferably the polyolefin and the fillers of the extruded product, the content by weight of fillers in the composition preferably being between 30% and 80%, more particularly preferably between 40% and 60%.

9. Use according to one of Claims 1 to 8, in the manufacture of films, sheets, tubes or strips.

10. Process for the extrusion of a polyolefin additivated with fillers, in the presence of a polymer processing aid, which makes it possible to obtain an extruded product, in which the polymer processing aid comprises a fluoropolymer exhibiting a viscosity of less than or equal to 15 kP at a temperature of 232°C and at a shear rate of 100 s⁻¹, measured using a capillary rheometer according to Standard ASTM D3825, and in which the extruded product comprises a content of fillers of greater than or equal to 15% by weight.

11. Process according to Claim 10, in which the fluoropolymer is as described in either of Claims 2 and 3.

12. Process according to Claim 10 or 11, in which the fillers are as described in Claim 5 and/or are present in the extruded product in the content described in Claim 4.

13. Process according to one of Claims 10 to 12, in which the polymer processing aid is a composition as described in one of Claims 6 to 8.

14. Process according to one of Claims 10 to 13, in which the polymer processing aid is used in an amount such that the content by weight of fluoropolymer in the extruded product is from 0.01% to 1%, preferably from 0.02% to 0.5% and more particularly preferably from 0.02% to 0.15%.

15. Process according to one of Claims 10 to 14, in which the extruded product is a film, a sheet, a tube or a strip.
